# EUROPÄISCHE PATENTSCHRIFT

(11) **EP 0 341 621 B1**
(45) Veröffentlichungstag und Bekanntmachung des Hinweises auf die Patenterteilung: **16.03.1994**
(21) Anmeldenummer: 89108218.2
(22) Anmeldetag: 06.05.1989
(51) Int. Cl.: H01B 7/28, H01B 3/44

(54) **Elektrische Kabel, die Isolierungen auf Basis von Ethylenpolymerisaten mit hoher Widerstandsfähigkeit gegenüber der Bildung von Wasserbäumchen enthalten**
Electrical cables containing insulations based on ethylene polymerisates with a high resistance capability against the formation of water trees
Câbles électriques contenant des isolants à base de polymérisats d'éthylène ayant une grande résistance aux arborescences dues à l'eau

(30) Priorität: 13.05.1988 DE 3816397
(43) Veröffentlichungstag der Anmeldung: 15.11.1989
(73) Patentinhaber: BASF Aktiengesellschaft, 67063 Ludwigshafen (DE)
(72) Erfinder: Koehnlen, Ernst, Dr., D-6700 Ludwigshafen (DE); Schlag, Johannes, Dr., D-6700 Ludwigshafen (DE); Vogt, Heinz, Dr., D-6700 Ludwigshafen (DE); Bauer, Peter, D-6700 Ludwigshafen (DE); Hauss, Alfred Friedrich, Dr., D-6700 Ludwigshafen (DE)

(56) Entgegenhaltungen:
- EP-A- 0 248 148
- WO-A-85/05216
- GB-A- 2 034 723
- CHEMICAL ABSTRACTS, Band 101, Nr. 22, 26. November 1984, Seite 46, Zusammenfassung Nr. 193143j, Columbus, Ohio, US; & JP-A-59 133 238 (MITSUI PETROCHEMICAL INDUSTRIES LTD) 31-07-1984

## Beschreibung

Die Erfindung betrifft elektrisches Hochspannungskabel von 1 bis 500 kV, wobei die Kabelisolierung gegenüber dem Entstehen oder dem Wachstum von Wasserbäumchen (water trees) widerstandsfähig ist und besteht aus 70 bis 99 Gew.-Teilen eines Ethylenpolymerisats I und 1 bis 30 Gew.-Teilen eines von I unterschiedlichen Ethylencopolymerisates II und üblichen Zusatzstoffen in üblichen Mengen.

Bei derartigen Isolierungen für elektrische Hochspannungskabel und Leitungen aus Ethylenpolymerisaten können sich bei gleichzeitiger Einwirkung von hohen elektrischen Feldstärken und Feuchtigkeit die sogenannten Wasserbäumchen (water trees) ausbilden, die als Schwächung der Isolierung angesehen werden und deshalb durch geeignete Zusätze vermieden werden müssen.

Es gibt zahlreiche Vorschläge zur Vermeidung bzw. Verminderung der Gefahr von Wasserbäumchen, welche die Zusammensetzung bzw. die Zugabe von Verzögerer gegen die Bildung von Wasserbäumchen betreffen.

So ist es aus der DE-A-29 48 492 bekannt, das für Kabelisolierungen vorgesehene Polyolefinmaterial nach der Granulierung und unmittelbar vor der Extrusion mit reinem Wasser zu waschen, um die die Wasserbäumchen verursachenden geringen Mengen wasserlöslicher und hygroskopischer Salze zu entfernen (vgl. DE-A-29 11 756). Nachteilig bei diesem bekannten Verfahren ist der verhältnismäßig große Verfahrensaufwand, denn die Granulate müssen nach dem Waschvorgang mit Heißluft getrocknet werden.

Es ist auch bereits beschrieben, dem Polyolefinkabelmaterial vor seiner Herstellung sog. Wasserbäumchen-Inhibitoren zuzusetzen, die sich von polymeren Materialien ableiten. So werden für diesen Zweck in der Literatur empfohlen: Organopolysiloxane (vgl. US-A-4 492 647, 4 536 530 und EP-A-109 797), Polyethylenglykole (vgl. EP-A-57 604), Epoxidharze (vgl. Chem. Abstr. 96:182235), Ethylen-1-Buten- oder -1-Hexen-Copolymerisate (vgl. Chem. Abstr. 101:193825), Polypropylen (vgl. Chem. Abstr. 102:8329), Poly-1-buten (vgl. Chem. Abstr. 98:5097), Ethylen-Vinylacetat-Copolymerisat (vgl. Chem. Abstr. 93:169329), Polystyrol und Triallylisocyanurat (vgl. DD-A-160 808) mit Styrol gepfropftes Ethylen-Vinylacetat- oder Ethylen-Alkylacrylat-Copolymerisat (vgl. Chem. Abstr. 103:7802), Polyvinylalkohol (vgl. Chem. Abstr. 95:204983), chlorsulfoniertes Polyethylen (vgl. Chem. Abstr. 95:204981), Polyamid (vgl. Chem. Abstr. 96:21007) Ethylen-Ethylacrylat-Copolymerisat (vgl. Chem. Abstr. 99:117160) oder ein Styrolcopolymerisat, z.B. Styrol-Butadien- oder Styrol-Isopren-Kautschuk (vgl. Chem. Abstr. 92:7572).

Bei den oben beschriebenen bekannten Polyolefinkabelmaterialien mit Zusätzen von polymeren Wasserbäumchen-Inhibitoren sind die Effekte und die Beeinflussung des Wasserbäumchenwachstums sehr unterschiedlich, quantitative Aussagen fehlen in den meisten Fällen. In vielen Fällen wirken sich die Zusätze negativ auf die Homogenität des Polyolefin-Kabelmaterials und nachteilig auf die Alterungsbeständigkeit des Isoliermaterials sowie auf die elektrischen Eigenschaften (Dielektrizitätszahl, dielektrischer Verlustfaktor) aus.

Es ist auch bereits bekannt, Ethylen-α-Olefin-Copolymerisate mit Ethylenpolymerisaten zu mischen und aus diesen Mischungen Materialien für die Kabelisolierung herzustellen (vgl. GB-A-20 34 723, Chem. Abstr. 101: 193 143 oder Chem. Abstr. 101: 112 084). Die bekannten Mischungen weisen gute mechanische Eigenschaften auf und können durch Bestrahlen mit energiereichen Strahlen leicht vernetzt werden.

In der EP-A-248 148 sind Kabelisolierungen mit hoher Widerstandsfähigkeit gegenüber dem Entstehen von Wasserbäumchen beschrieben, die aus einem Gemisch zweier Ethylenpolymerisate bestehen, wobei das eine Ethylenpolymerisat Polyethylen sein kann und das zweite Polymerisat ein Terpolymerisat aus Ethylen, Acrylsäureester und Acrylsäure ist. Derartige Polyolefinkabelmaterialien weisen aber noch den Nachteil auf, daß ihre mechanische Festigkeit niedriger und daß ihre Haftung auf anderen z.B. leitfähigen Schichten der Kabelisolierung, jeweils verglichen mit den erfindungsgemäßen Materialien, höher ist. Insbesondere letztere Eigenschaft erschwert die Handhabung bei Arbeiten bei der Herstellung von Anschlüssen und Verbindungen. Zudem muß der Gehalt an Comonomeren in der Gesamtmischung, verglichen mit den erfindungsgemäßen Polymeren, höher sein, wenn der gewünschte Effekt der Inhibierung des Entstehens und Wachsens von Wasserbäumchen erzielt werden soll.

Aufgaben der vorliegenden Erfindung war es, die erwähnten Nachteile zu vermeiden und eine Kabelisolierung für elektrische Kabel auf Basis von Ethylenpolymerisaten zu schaffen, die sowohl eine hohe Widerstandsfähigkeit gegenüber dem Entstehen oder dem Wachstum von Wasserbäumchen aufweisen als auch geringe dielektrische Verluste und eine hohe Alterungsbeständigkeit, sowie sehr gute Verarbeitbarkeit besitzen.

Diese Aufgaben wurden durch die Merkmale des kennzeichnenden Teils des Anspruch 1 gelöst.

Bevorzugt ist auch ein elektrisches Hochspannungskabel, bei dem das Ethylenpolymerisat I ein nach dem Hochdruckpolymerisationsprozeß hergestelltes Ethylenhomopolymerisat, ein Ethylen-Alkylacrylat-Copolymerisat, ein Ethylen-Alkylacrylat-Acrylsäure-Terpolymerisat oder eine Mischung aus diesen Polymerisaten ist.

Bevorzugt weist das Ethylenpolymerisat I einen Schmelzindex von 0,2 bis 10 g/10 min und eine Dichte von 0,890 bis 0,934 g/cm³ auf.

Bevorzugt ist auch ein elektrisches Hochspannungskabel, bei dem das Ethylencopolymerisat II mittels eines Zieglerkatalysatorsystems hergestellt ist.

Elektrische Kabel und Isolierungen für elektrische Kabel und Leitungen aus Ethylenpolymerisaten sind wohlbekannt. Unter Hochspannungskabeln werden solche verstanden, deren elektrische Belastung mindestens 1 kV, vorzugsweise 10 kV bis 500 kV und insbesondere 20 kV bis 500 kV beträgt.

Derartige Kabel unterscheiden sich von herkömmlichen Kabeln und Leitungen somit in der stärkeren elektrischen Beanspruchung bei gleichzeitig erhöhter thermischer Belastung.

Es ist wichtig, daß das Isoliermaterial besondere physikalische, mechanische und elektrische Eigenschaften aufweist, um es für diese spezielle Anwendungen in der Kabelindustrie geeignet zu machen. Im vorliegenden Fall soll insbesondere die Widerstandsfähigkeit gegenüber der Bildung von Wasserbäumchen derart verbessert sein, daß bei Anwendung eines Ethylenpolymerisatmaterials mit technisch nicht vermeidbaren Gehalten an Verunreinigungen an wasserlöslichen Salzen unter hohen Spannungsbelastungen bei Wasser- oder Feuchtigkeitszutritt die Lebensdauer der Isolierung gegenüber nicht ausgerüstetem Material erhöht ist, um auch über längere Zeit hin erhöhte Durchschlagsfestigkeiten aufzuweisen. Da die zulässige Leitertemperatur 90°C beträgt, soll gleichzeitig eine gute Alterungsbeständigkeit, d.h. eine langanhaltende Beständigkeit gegen thermische Oxidation und Abfall der mechanischen Eigenschaften gewährleistet sein.

Unter den Ethylenpolymerisaten I im Sinne der vorliegenden Erfindung sollen Ethylenhomo- und -copolymerisate verstanden werden, die sich vom Ethylen-α-Olefin-Copolymerisat II unterscheiden. Derartige Ethylenpolymerisate sind so bekannt, daß sich eine weitere Erläuterung erübrigt.

Besonders geeignete Ethylenpolymerisate I sind nach dem Hochdruckpolymerisationsprozeß hergestellte Ethylenhomopolymerisate, sowie Ethylen-Alkylacrylat-Copolymerisate, insbesondere Ethylen-Ethylacrylat, n- oder tert.-butyl- oder ethylhexylacrylat oder Ethylen-Alkylacrylat-Acrylsäure-Copolymerisate (vgl. z.B. EP-A-248 148).

Der Alkylacrylatgehalt der Ethylen-Alkylacrylat-Copolymerisate kann 2 bis 20 Gew.% betragen.

Die Ethylenpolymerisate I weisen im nicht vernetzten Zustand bevorzugt Schmelzindexwerte, gemessen nach ASTM-D 1238-70 bei 190°C und 2,16 kg Belastung von 0,2 bis 10 g/10 min und Dichten von 0,890 bis 0,934 g/cm³, gemessen nach DIN 53 479, auf. Statt der reinen Ethylenhomo- oder -copolymerisate sind auch Mischungen verschiedener Ethylenpolymerisate geeignet. Derartige Ethylenpolymerisate, deren Eigenschaften und Herstellung sind beispielsweise in den Publikationen "Ullmanns Encyklopädie der technischen Chemie", 4. Auflage, Band 19, Verlag Chemie GmbH, D-6940 Weinheim, 1980, Seiten 169 bis 195; "Kunststoffe" 67, (1977), Seiten 118 bis 121 und den US-Patenten 3 117 953 und 4 217 431 beschrieben. Die Ethylenpolymerisate (I) können vernetzt oder unvernetzt sein, bevorzugt sind sie aber zu 50 bis 90 % entweder durch Peroxide oder energiereiche Strahlung vernetzt.

Das erfindungsgemäße elektrische Hochspannungskabel enthält neben dem Ethylenpolymerisat I 1 bis 30, bevorzugt 5 bis 20 Gew.-Teile eines von I unterschiedlichen Ethylencopolymerisats II, wobei sich die Gewichtszahlen auf das Gewicht des Ethylenpolymerisats I beziehen. Das Ethylencopolymerisat II wird mit dem Ethylenpolymerisat I in üblichen Mischern nach herkömmlichen Methoden gemischt.

Die Mischung aus Ethylenpolymerisat I und Ethylencopolymerisat II enthält noch übliche Zusatzstoffe in üblichen Mengen. Unter üblichen Zusatzstoffen sind insbesondere Antioxidantien, Flammschutzmittel, Vernetzungshilfsmittel wie Triallylcyanurat und Vernetzungsmittel wie organische Peroxide zu verstehen, und zwar in Mengen von 0,5 bis 3,0 Gew.%, bezogen auf die Mischung.

Das Ethylencopolymerisat II soll ein Copolymerisat aus 80 bis 92 Gew.% Ethylen und 8 bis 20 Gew.% eines C₄- bis C₁₀-, vorzugsweise eines C₄- bis C₈- und insbesondere eines C₄- bis C₆-α-Olefins sein, wobei die Summe der Prozentzahlen stets 100 ist.

Die Ethylencopolymerisate II sind wohlbekannt und unter der Bezeichnung VLDPE (= very low demsity polyethylene) im Handel erhältlich (vgl. UCAR®-FLX-Resins "DFDA-1137 Natural 7" und "DFDA-1138 Natural" der Union Carbide Corp., USA). Die erfindungsgemäß zu verwendenden Ethylencopolymerisate II enthalten als Comonomer bevorzugt Buten-1, Hexen-1 oder Octen-1, sie weisen einen Schmelzindex von 0.5 bis 20, bevorzugt 1 bis 10 g/10 min, gemessen nach ASTM D 138-65 T bei 190°C und 2,16 kg Auflagegewicht, eine Dichte nach DIN 53 479 von 0,890 bis 0,915 g/cm³ sowie ein Verhältnis M̅_{w}/M̅ₙ von 3 bis 6. mittels Gelpermeationschromatographie bestimmt, und eine Kristallitschmelztemperatur, bestimmt nach ASTMD 3418-82 mit Differential Scanning Calorimetry (DSC) von 90 bis 125, bevorzugt 116 bis 120°C auf. Die Copolymerisate II werden durch Niederdruckcopolymerisation in Gegenwart eines Ziegler-Natta-Katalysators erhalten (vgl. EP-A-4645 und 4647) und weisen eine heterogene Verteilung des α-Olefins auf. Derartige heterogene Copolymerisate sind z.B. beschrieben im US-Patent 4 359 561.

Die mit der Erfindung erzielbaren Vorteile sind insbesondere darin zu sehen, daß ein Hochspannungskabel mit einem Kabelisoliermaterial auf Basis von Ethylenpolymerisaten zur Verfügung gestellt wird, wobei sowohl das Entstehen oder Wachsen von Wasserbäumchen inhibiert ist als auch geringe dielektrische Verluste und hohe Alterungsbeständigkeit bei sehr guter Verarbeitbarkeit und hoher mechanischer Festigkeit zu verzeichnen sind.

### Vergleichsbeispiel A

Polyethylen niederer Dichte des Schmelzindex von 2 g/10 min und einer Dichte von 0,918 g/cm³ werden mit 0,3 Gew.% 4,4'-Thiobis-(6-tertiärbutyl-3-methyl-phenol) als Wärmestabilisator und 1,8 Gew.% Dicumylperoxid als Vernetzer ausgerüstet.

Aus dieser Zubereitung werden 1 mm dicke Preßplatten hergestellt bei einer Temperatur von 130°C, wobei das Polyethylen nicht vernetzt wird.

Bei der Prüfung auf water-tree wird Kochsalz in Form kleiner Kristalle (Kantenlänge 10 µm) fein verteilt als Schicht in das Polyethylen eingebracht. Dies geschieht, indem das Salz auf die unvernetzte Platte aufgestäubt, danach eine zweite ebensolche Platte aufgelegt und dieses Sandwich bei 200°C 10 min auf eine Dicke von 1 mm gepreßt wird. Dabei wird das Polyethylen vernetzt.

Danach werden die Proben bei 100 %iger Luftfeuchtigkeit mit einer Feldstärke von 2,5 kV/mm belastet.

Nach der elektrischen Belastung werden unter einem Lichtmikroskop die Anzahl, die Länge und die Struktur der entstandenen water trees in den einzelnen Proben festgestellt. Die Feststellung der Zahl der water trees geschieht im Strahlengang parallel zur Richtung des elektrischen Feldes, in dem die Belastung erfolgte.

Die Zahl der gebildeten water trees wird auf die Zahl der NaCl-Kristalle bezogen und als Menge in Gew.% in der Tabelle angegeben. Die Länge der water trees wird an ca. 0,5 mm dicken Schnitten durch die Probe ermittelt, wobei die Blickrichtung senkrecht zu der des elektrischen Feldes steht.

Die dielektrischen Verluste (tangδ) werden an 1 mm dicken Preßplatten bei 23°C und 80°C und einer Frequenz von 60 Hz bestimmt.

### Vergleichsbeispiel B

Polyethylen wie in Vergleichsbeispiel A wird mit einem Copolymerisat bestehend aus 82 Gew.% Ethylen 18 Gew.% n-Butylacrylat derart gemischt, daß die Mischung 2,6 Gew.% nBA enthält. Wärmestabilisator und Vernetzer wird wie in dem Vergleichsbeispiel A (vgl. EP-A-248 148) zugesetzt.

Geprüft wird wie in Vergleichsbeispiel A, Ergebnis siehe Tabelle.

### Vergleichsbeispiel C

Ein Ethylen-n-Butylacrylat-Copolymerisat mit 2,6 Gew.% einpolymerisiertem n-Butylacrylat mit einem Schmelzindex von 2 g/10' und einer Dichte von 0,918 g/cm³ wird mit Wärmestabilisator und Vernetzer wie in dem Vergleichsbeispiel A ausgerüstet.

Geprüft wird wie in Vergleichsbeispiel A, Ergebnis siehe Tabelle.

### Beispiel 1

90 Gew.-Teile Polyethylen wie in Vergleichsbeispiel A wird mit 10 Gew.-Teilen eines Copolymerisates aus 88 Gew.% Ethylen und 12 Gew.% Buten-1, einer Dichte von 0.903 g/cm³, einem Schmelzindex von 1 g/10', einem Verhältnis M̅_{w}/M̅ₙ von 6 und einem Kristallitschmelzpunkt von 121°C gemischt. Wärmestabilisator und Vernetzer wird wie in dem Vergleichsbeispiel A zugesetzt.

Geprüft wird wie in Vergleichsbeispiel A, Ergebnis siehe Tabelle.

### Beispiel 2

90 Gew.-Teile Polyethylen wie in Vergleichsbeispiel B werden mit 10 Gew.-Teilen des in Beispiel 1 beschriebenen Ethylen-Buten-1-Copolymerisats gemischt. Wärmestabilisator und Vernetzer wird wie in dem Vergleichsbeispiel A zugesetzt.

Geprüft wird wie in Vergleichsbeispiel A, Ergebnis siehe Tabelle.

### Beispiel 3

90 Gew.-Teile Polyethylen wie in Vergleichsbeispiel C werden mit 10 Gew.-Teilen des in Beispiel 1 beschriebenen Ethylen-Buten-1-Copolymerisats gemischt. Wärmestabilisator und Vernetzer wird wie in dem Vergleichsbeispiel A zugesetzt.

Geprüft wird wie in Vergleichsbeispiel A, Ergebnis siehe Tabelle.

**Tabelle**

| Beispiel | Anzahl der water trees nach | | | |
|---|---|---|---|---|
| | 1 Tag | 2 Tagen | 10 Tagen | 100 Tagen |
| A | 70 | 100 | | |
| B | 50 | 100 | | |
| C | 50 | 100 | | |
| 1 | 0 | 0 | 0 | 0 |
| 2 | 0 | 0 | 0 | 0 |
| 3 | 0 | 0 | 0 | 0 |

## Patentansprüche

1. Elektrisches Hochspannungskabel von 1 bis 500 kV, wobei die Kabelisolierung gegenüber dem Entstehen oder dem Wachstum von Wasserbäumchen [water trees] widerstandsfähig ist und besteht aus einem Ethylenpolymerisat I und einem von Ethylenpolymerisat I unterschiedlichen Ethylencopolymerisat II, das sich aus 80 bis 92 Gew.-% Ethylen und 8 bis 20 Gew.-% eines C₄- bis C₁₀-α-Olefins mit einer Dichte von 0,890 bis 0,915 g/cm³ und einer Kristallitschmelztemperatur von 90 bis 125°C zusammensetzt und üblichen Zusatzstoffen in üblichen Mengen, dadurch gekennzeichnet, daß die Kabelisolierung aus 70 bis 99 Gew.-Teilen des Ethylenpolymerisates I und 1 bis 30 Gew.-Teilen des Ethylen-copolymerisates II besteht und das Ethylen-Copolymerisat II eine heterogene Verteilung des α-Olefins aufweist und einen Schmelzindex von 0,5 bis 20 g/10' sowie ein Verhältnis M̅_{w}/M̅ₙ von 3 bis 6 hat.

2. Elektrische Hochspannungskabel nach Anspruch 1, dadurch gekennzeichnet, daß das Ethylenpolymerisat I ein nach dem Hochdruckpolymerisationsprozeß hergestelltes Ethylenhomopolymerisat, ein Ethylen-Alkylacrylat-Copolymerisat, ein Ethylen-Alkylacrylat-Acrylsäure-Terpolymerisat oder eine Mischung aus diesen Polymerisaten ist.

3. Elektrisches Hochspannungskabel nach Anspruch 1, dadurch gekennzeichnet, daß das Ethylenpolymerisat I einen Schmelzindex von 0,2 bis 10 g/10' und eine Dichte von 0,890 bis 0,934 g/cm³ aufweist.

4. Elektrisches Hochspannungskabel nach Anspruch 1, dadurch gekennzeichnet, daß das Ethylencopolymerisat II mittels eines Zieglerkatalysatorsystems hergestellt ist.

## Claims

1. An electric high voltage cable of 1-500 kV in which the the cable insulation is resistant to the formation or the growth of water trees and consists of an ethylene polymer I and an ethylene copolymer II, which differs from I and is composed of from 80 to 92% by weight of ethylene and from 8 to 20% by weight of a C₄-C₁₀-α-olefin having a density of from 0.890 to 0.915 g/cm³ and a crystallite melting point of from 90 to 125°C, and conventional additives in customary amounts, wherein the cable insulation contains from 70 to 99 parts by weight of the ethylene polymer I and from 1 to 30 parts by weight of the ethylene copolymer II, and the ethylene copolymer II has a heterogeneous distribution of the α-olefin and possesses a melt flow index of from 0.5 to 20 g/10 min and a ratio M̅w/M̅n of from 3 to 6.

2. An electric high voltage cable as claimed in claim 1, wherein the ethylene polymer I is an ethylene homopolymer prepared by the high pressure polymerization process, an ethylene/alkyl acrylate copolymer, an ethylene/alkyl acrylate/acrylic acid terpolymer or a blend of these polymers.

3. An electric high voltage cable as claimed in claim 1, wherein the ethylene polymer I has a melt flow index of from 0.2 to 10 g/10 min and a density of from 0.890 to 0.934 g/cm³.

4. An electric high voltage cable as claimed in claim 1, wherein the ethylene copolymer II is prepared using a Ziegler catalyst system.

## Revendications

1. Câble électrique à haute tension de 1 à 500 kV, où l'isolation du câble est capable de résister à la formation ou à la croissance d'une arborescence aqueuse [water trees] et est constituée d'un polymère de l'éthylène I et d'un copolymère de l'éthylène II qui diffère du polymère d'éthylène I, qui se compose de 80 à 92% en poids d'éthylène et de 8 à 20% en poids d'une alpha-oléfine en C₄ à C₁₀, d'une masse spécifique de 0,890 à 0,915 g/cm³ et d'une température de fusion des cristallites de 90 à 125°C et d'additifs habituels en proportions usuelles, caractérisé en ce que l'isolation du câble se compose de 70 à 99 parties en poids du polymère d'éthylène I et de 1 à 30 parties en poids du copolymère d'éthylène II et le copolymère d'éthylène II présente une répartition hétérogène de l'alpha-oléfine et un indice de fusion de 0,5 à 20 9/10', et possède aussi un rapport M̅p/M̅n de 3 à 6.

2. Câble électrique à haute tension suivant la revendication 1, caractérisé en ce que le polymère de l'éthylène I est un homopolymère de l'éthylène préparé par un procédé de polymérisation sous pression élevée, un copolymère de l'éthylène et d'un acrylate d'alkyle, un terpolymère de l'éthylène, d'un acrylate d'alkyle et de l'acide acrylique, ou un mélange de ces polymères.

3. Câble électrique à haute tension suivant la revendication 1, caractérisé en ce que le polymère de l'éthylène I présente un indice de fusion de 0,2 à 10 g/10' et une masse spécifique de 0,890 à 0,934 g/cm³.

4. Câble électrique à haute tension suivant la revendication 1, caractérisé en ce que le copolymère de l'éthylène II est préparé à l'aide d'un système catalytique de Ziegler.
